# EUROPÄISCHE PATENTANMELDUNG

(11) **EP 2 575 314 A1**
(43) Veröffentlichungstag der Anmeldung: **03.04.2013**
(21) Anmeldenummer: 11183406.5
(22) Anmeldetag: 30.09.2011
(51) Int. Cl.: H04L 29/06, H04L 12/24

(54) **Sicherheits-Netzkomponente zur Handhabung eines Zugangsschutzes für ein Netzwerkgerät**

(71) Anmelder: Siemens Aktiengesellschaft, 80333 München (DE)
(72) Erfinder: Liao, Raymond, 91074 Herzogenaurach (DE); Schmid, Wolfgang, 90592 Schwarzenbruck-Lindelburg (DE)

(57) **Zusammenfassung**

Die vorliegende Erfindung beschreibt eine Sicherheits-Netzkomponente (110) zur Handhabung eines Zugangsschutzes für ein Netzwerkgerät (140) über ein Kommunikationsnetz (160),
- wobei die Sicherheits-Netzkomponente (110) eine Zugangsschutzdatenbank (120) umfasst, in der für einen Benutzer (170) eine Benutzer-Zugangskennung zur Ermöglichung eines Zugriffs auf das Netzwerkgerät (140) und eine sich von der Benutzer-Zugangskennung unterscheidende Sicherheits-Zugangskennung gespeichert ist,
- wobei die Sicherheits-Netzkomponente zur Einrichtung und/oder Änderung eines Zugangsschutzes im Netzwerkgerät (140) eingerichtet und ausgebildet ist, und
- wobei in der Sicherheits-Netzkomponente (110) für das Netzwerkgerät (140) ein Änderungszustand für den Benutzer (170) und ein Ruhezustand derart vorgesehen sind, dass
- die Sicherheits-Netzkomponente (110) zum Einrichten der Sicherheits-Zugangskennung als Zugangskennung für das Netzwerkgerät (140) beim Einstellen des Ruhezustands für das Netzwerkgerät (140) eingerichtet und ausgebildet ist, und
- dass die Sicherheits-Netzkomponente (110) zum Einrichten der Benutzer-Zugangskennung als Zugangskennung für das Netzwerkgerät (140) beim Einstellen des Änderungszustands für den Benutzer (170) für das Netzwerkgerät (140) eingerichtet und ausgebildet ist.

## Beschreibung

Die vorliegende Erfindung betrifft eine Sicherheits-Netzkomponente zur Handhabung eines Zugangsschutzes für ein Netzwerkgerät über ein Kommunikationsnetz.

Derartige Sicherheits-Netzkomponenten sind aus dem Stand der Technik bekannt. So offenbart beispielsweise das US Patent US 6,895,436 B1 eine Netzwerk-Management-Einheit zur Abfrage von in einem Kommunikations-Netz vorhandenen Geräten. Dabei kann die Netzwerk-Management-Einheit beispielsweise über ein Passwort auf eine der Komponenten dem Netzwerk zugreifen. Weiterhin kann die Netzwerk-Management-Einheit auch neue Passwörter aus den Informationen entnehmen, die sie über die im Netzwerk vorhandenen Geräte sammelt.

Ausgehend vom Stand der Technik ist es eine Aufgabe der vorliegenden Erfindung, eine Sicherheits-Netzkomponente zur Verfügung zu stellen, mittels welcher sich der Zugriff auf in ein Kommunikations-Netz eingebundenes Netzwerkgerät besser absichern lässt.

Diese Aufgabe wird gelöst von einer Sicherheits-Netzkomponente mit den Merkmalen des vorliegenden Patentanspruchs 1.

Eine derartige Sicherheits-Netzkomponente ist zur Handhabung eines Zugangsschutzes für ein Netzwerkgerät über ein Kommunikations-Netz eingerichtet und ausgebildet. Dabei umfasst die Sicherheits-Netzkomponente eine Zugangsschutz-Datenbank, in der für einen Benutzer eine Benutzer-Zugangskennung zur Ermöglichung eines Zugriffs auf das Netzwerkgerät sowie eine sich von der Benutzer-Zugangskennung unterscheidende Sicherheits-Zugangskennung abgespeichert ist. Die Sicherheitskomponente ist zur Einrichtung und/oder Änderung eines Zugangsschutzes im Netzwerkgerät eingerichtet und ausgebildet. Innerhalb der Sicherheitskomponente ist für das Netzwerkgerät ein Änderungszustand für den Benutzer und ein Ruhezustand vorgesehen. Dabei ist die Sicherheits-Netzkomponente derart eingerichtet und ausgebildet,
dass beim Einstellen des Ruhezustandes für das Netzwerkgerät die Sicherheits-Zugangskennung als Zugangskennung für das Netzwerkgerät eingerichtet wird, und
dass beim Einstellen des Änderungszustandes für den Benutzer die Benutzer-Zugangskennung als Zugangskennung für das Netzwerkgerät eingerichtet wird.

Über eine solche Sicherheits-Netzkomponente lässt sich der Zugang zu dem Netzwerkgerät sicher gestalten, indem über die Sicherheits-Netzkomponente ein Zugriff für einen Benutzer nur zeitweise freischaltbar ist. Während der nicht für den Benutzer freigegebenen Zeit ist ein durch die Sicherheits-Netzkomponente initiierter separater Zugangsschutz im Netzwerkgerät vorgesehen, der beispielsweise anderen Sicherheitsregeln unterliegen kann und so z. B. einen beschränkteren Zugriff auf das Netzwerkgerät gestatten kann.

Auf diese Weise kann beispielsweise den Zugriff auf beispielsweise einfachere oder ältere Netzwerkgeräte sicherer gestaltet werden, bei welchen häufig nur eine mögliche Zugangskennung oder nur sehr wenige Zugangskennungen für das Netzwerkgerät hinterlegbar sind. Auf solchen Geräten sind z.B. modernere Zugangs-Regeln, Sicherheits-Policies und Sicherheitsstufen beim Zugangsschutz oft nur schwierig umsetzbar, da sie dafür nicht eingerichtet und ausgelegt sind. Über die Sicherheits-Netzkomponente lässt sich zumindest die Sicherheit verbessern, indem über die Sicherheits-Zugangskennung durch den Ruhezustand zumindest eine zweite Sicherheitsstufe beim Zugriff auf das Netzwerkgerät ermöglicht werden kann.

So können beispielsweise über die Sicherheits-Netzkomponente für verschiedene Benutzer verschiedene Benutzer-Kennungen über die Sicherheits-Netzkomponente beim Netzwerkgerät einstellbar sein, auch wenn im Netzwerkgerät selbst beispielsweise nur Speicherplatz für sehr wenige Benutzerkennungen vorgesehen ist. Beispielsweise kann über eine zusätzliche Eigenschaft der Sicherheits-Netzkomponente und/oder des Netzwerkgeräts auch der Zugang für verschiedene Benutzer mit unterschiedlichen Zugriffsmöglichkeiten und Änderungsmöglichkeiten auf das Netzwerkgerät bzw. im Netzwerkgerät verknüpft sein. Diese Zugriffs- und/oder Änderungsmöglichkeiten können beispielsweise auch über die Sicherheits-Netzkomponente im Netzwerkgerät einstellbar sein oder eingestellt werden.

Die Sicherheits-Netzkomponente kann beispielsweise als eigenständiges Gerät zur Integration in ein Kommunikationsnetz, als Zusatzmodul für ein anderes in einem Kommunikationsnetz integriertes oder integrierbares Gerät oder Netzwerkgerät, als Zusatzmodul oder Untereinheit für einen Netzwerkknoten (z.B. ein Switch, ein Router oder eine Bridge) oder beispielsweise auch als Komponente für ein Automatisierungssystem, beispielsweise ein modulares Automatisierungssystem (z.B. eine Speicher programmierbare Steuerung), ausgebildet und eingerichtet sein. Weiterhin kann die Sicherheits-Netzkomponente auch als Netzwerkkarte für einen Computer oder ein anderes elektronisches Gerät ausgebildet und eingerichtet sein.

Die Sicherheits-Netzkomponente kann insbesondere auch zur Handhabung eines Zugangsschutzes für mehrere Netzwerkgeräte ausgebildet und eingerichtet sein. Dies können beispielsweise einzelne Geräte in einem Kommunikationsnetz oder auch alle im Kommunikationsnetz vorhandenen, manage-baren bzw. handhabbaren Komponenten beziehungsweise diejenigen in einem bestimmten Sub-Netz sein.

Ein Netzwerkgerät kann jedes in ein Kommunikationsnetz integrierbares oder integriertes Gerät sein. Insbesondere weist das Netzwerkgerät mindestens eine Schnittstelle zur Kommunikation des Geräts über das Kommunikationsnetz bzw. mit dem Kommunikationsnetz auf.

Weiterhin ist das Netzwerkgerät derart eingerichtet und ausgebildet, dass ein Zugangsschutz für einen Zugriff eines Benutzers auf das Netzwerkgerät vorgesehen, eingerichtet und/oder einrichtbar ist. Insbesondere umfasst der Zugangsschutz die Verwendung einer Zugangskennung den Zugriff eines Benutzers. Weiterhin ist das Netzwerkgerät derart ausgebildet und eingerichtet, dass der Zugangsschutz, z.B. die Zugangskennung, über ein externes Gerät, beispielsweise die Sicherheits-Netzkomponente, handhabbar, einrichtbar und/oder änderbar ist.

Beispielsweise kann ein Netzwerkgerät eine Netzkomponente, wie beispielsweise ein Switch, ein Router, eine Bridge oder Ähnliches sein. Weiterhin kann das Netzwerkgerät auch als eine Steuerungs- und/oder Automatisierungskomponente beziehungsweise ein Steuerungs- und/oder Automatisierungsgerät ausgebildet und eingerichtet sein.

Das Kommunikationsnetz kann als drahtgebundenes oder drahtloses Kommunikationsnetz ausgebildet und eingerichtet sein. Beispielsweise kann ein Kommunikationsnetz als Ethernet, Profinet, Profibus, Rückwandbus oder Ähnliches Kommunikationsnetz beziehungsweise Kommunikationssystem ausgebildet und eingerichtet sein. Ein Drahtlos-Netz kann beispielsweise als WLAN, GSM, UMTS, WirelessHART, WiMAX oder ähnliches Kommunikationssystem ausgebildet und eingerichtet sein.

Sicherheits-Netzkomponente und Netzwerkgerät sind dabei derart ausgebildet und eingerichtet, dass die Handhabung des Zugangsschutzes für das Netzwerkgerät durch die Sicherheits-Netzkomponente erfolgen kann beziehungsweise erfolgt, wenn die Sicherheits-Netzkomponente und das Netzwerkgerät am Kommunikationsnetz angeschlossen sind.

Die Zugangsschutz-Datenbank kann beispielsweise auch eine Zugangskennung für mehrere Benutzer umfassen. Weiterhin kann die Zugangsschutz-Datenbank auch mehrere Benutzer-Zugangskennungen für einen Benutzer oder jeweils mehrere Benutzer-Zugangskennungen für mehrere Benutzer umfassen. Dabei kann beispielsweise vorgesehen sein, dass bei mehreren Benutzern jedem der Benutzer eine Benutzer-Zugangskennung zugeordnet ist, insbesondere jedem der Benutzer genau eine Benutzer-Zugangskennung zugeordnet ist. Weiterhin können auch einem, mehreren oder auch allen Benutzern mehrere Benutzer-Zugangskennungen zugeordnet sein, die beispielsweise an unterschiedliche Zugangsbedingungen, Randbedingungen oder Einstellungen des Netzwerkgeräts gekoppelt sein können.

Unter einem Benutzer wird im Zusammenhang mit der vorliegenden Beschreibung sowohl ein menschlicher Benutzer verstanden, welcher letztendlich ein Netzwerkgerät bedient. Weiterhin wird unter einem Benutzer auch ein Gerät verstanden, welches auf das Netzwerkgerät zugreift. Dabei kann vorgesehen sein, dass ein solches Benutzer-Gerät selbsttätig auf das Netzwerkgerät zugreift oder z.B. dass ein menschlicher Benutzer mit Hilfe des Benutzer-Geräts auf das Netzwerkgerät zugreifen kann bzw. zugreift. Solche Geräte bzw. Benutzer-Geräte können beispielsweise Computer, Bedien-Terminals oder andere Geräte sein. Dabei können solche Geräte mit dem Netzwerkgerät beispielsweise auch über das Kommunikationsnetz kommunizieren oder auch über andere Kommunikationsverbindungen kommunizieren.

Die Benutzer-Zugangskennung kann beispielsweise als ein Passwort, ein bestimmter alphanumerischer oder sonstiger Code, ein Hardware- oder Software-Token, eine biometrischer Kennung oder auch weitere Zugangsschutz-Möglichkeiten ausgebildet und eingerichtet sein.

Die Sicherheits-Netzkomponente und/oder das Netzwerkgerät können beispielsweise derart ausgestaltet sein, dass eine Benutzer-Zugangskennung einem bestimmten Benutzer den Zugriff auf mehrere oder alle von der Sicherheits-Netzkomponente gehandhabten Netzwerkgeräte gestattet. Weiterhin kann vorgesehen sein, dass für jedes der Netzwerkgeräte, welches von der Sicherheits-Netzkomponente gehandhabt wird, eine eigene Benutzer-Zugangskennung für einen bestimmten Benutzer vorgesehen ist.

Die Sicherheits-Zugangskennung kann beispielsweise ein Passwort, ein alphanumerischer oder sonstiger Code, ein Hardware- oder Software-Token, ein biometrischer Zugangsschutz oder Ähnliches sein. Insbesondere kann die Sicherheits-Zugangskennung beispielsweise ein alphanumerische oder sonstige Zufallssequenz sein oder eine solche umfassen. Dabei kann die Sicherheits-Zugangskennung beispielsweise von einem bestimmten Benutzer, beispielsweise einem Administrator, festgelegt werden und/oder einsehbar sein. Weiterhin kann vorgesehen sein, dass die Sicherheits-Zugangskennung in der Sicherheits-Netzkomponente selbst erzeugt wird und nur dort gespeichert ist und so normalen Benutzern der Sicherheits-Netzkomponente oder des Netzwerkgeräts nicht bekannt und/oder zugänglich ist. Die Sicherheits-Zugangskennung kann beispielsweise speziellen Benutzern, wie beispielsweise einem Netzwerkadministrator oder sonstigen Administrator, zugänglich sein oder auch derart in der Sicherheits-Netzkomponente und/oder dem Netzwerkgerät vorgehalten oder abgespeichert sein, dass sie einem Benutzer von außen nicht zugänglich ist.

Der Änderungszustand für den Benutzer kann beispielsweise derart vorgesehen sein, dass der Änderungszustand Benutzer- und Geräte-spezifisch eingerichtet ist. Das bedeutet z.B., dass für jeden Benutzer und, bei mehreren Geräten, für jedes Gerät, ein eigener Änderungszustand, beispielsweise in der Sicherheits-Netzkomponente vorgesehen ist. So kann bei mehreren Netzwerkgeräten dann beispielsweise vorgesehen sein, dass für ein Gerät für jeden der dort vorgesehenen Benutzer, ein eigener Änderungszustand für dieses Gerät vorgesehen ist. Dabei können zum Beispiel in der Sicherheits-Netzkomponente für verschiedene Benutzer eines Geräts verschiedene Zugriffsrechte und/oder Änderungsmöglichkeiten eingerichtet, vorgesehen und/oder einrichtbar sein. Diese verschiedenen Einstellungen können beispielsweise dann jeweils von der Sicherheits-Netzkomponente im Netzwerkgerät vorgenommen werden. Weiterhin können diese verschiedenen Zugriffs- und/oder Änderungsmöglichkeiten auch im Netzwerkgerät selbst festgelegt sein. Nach dem Einstellen eines Änderungszustands für einen bestimmten Benutzer können beispielsweise durch die Sicherheits-Netzkomponente die entsprechende Rechte und Änderungsmöglichkeiten frei geschaltet werden. Dieses Freischalten kann aber beispielsweise auch innerhalb des Netzwerkgeräts selbst erfolgen.

Weiterhin kann vorgesehen sein, dass ein genereller Änderungszustand für mehrere oder auch alle durch die Sicherheits-Netzkomponente gehandhabten Netzwerkgeräte vorgesehen ist. Dabei kann beispielsweise nach Einstellung des Änderungszustands für einen bestimmten Benutzer dieser Benutzer auf mehrere oder alle von der Sicherheits-Netzkomponente gehandhabten Geräte zugreifen beziehungsweise die Sicherheits-Netzkomponente schaltet alle der genannten Geräte für diesen Benutzer frei.

Der Ruhezustand kann beispielsweise Geräte spezifisch ausgebildet sein, wobei dann für jedes Gerät ein eigener Ruhezustand definiert und vorgesehen ist. Weiterhin kann auch ein genereller Ruhezustand vorgesehen sein, wobei dann bei mehreren durch die Sicherheits-Netzkomponente gehandhabten Geräten, diese gemeinsam im Ruhezustand befindlich sind. Sobald mindestens eines der Geräte in einem Änderungszustand für einen bestimmten Benutzer befindlich ist, lässt sich ein Ruhezustand nicht einstellen, ohne diesen Änderungszustand oder alle bisher laufenden Änderungszustände zu beenden.

In einer vorteilhaften Ausgestaltung kann vorgesehen sein, dass beim Einstellen des Ruhezustands das Einrichten des Netzwerkgeräts durch die Sicherheits-Netzkomponente derart erfolgt, dass die Sicherheits-Zugangskennung die einzige Möglichkeit des Zugriffs eines Benutzers auf das Netzwerkgerät ist. Dabei werden unter einem Benutzer auch hier beispielsweise ein menschlicher Benutzer und/oder ein Gerät (z.B. ein Computer, eine weitere Netzkomponente oder ein mit dem Netzwerkgerät kommunizierendes Gerät) verstanden. Ein solches Gerät kann beispielsweise wiederum durch einen menschlichen Benutzer bedient werden oder auch selbsttätig ohne konkretes Zutun eines menschlichen Benutzers agieren.

Diese Ausgestaltungsmöglichkeit hat den Vorteil, dass im Ruhezustand die Netzkomponente besser vor externen Zugriffen geschützt beziehungsweise dagegen gesichert ist, da in diesem Zustand keiner der Benutzer über seine Benutzer-Zugangskennung auf die Netzkomponente zugreifen kann. Auf diese Weise können beispielsweise einzelne Netzwerkgeräte, mehrere Netzwerkgeräte oder auch ein ganzes Kommunikationsnetz oder Kommunikations-Subnetz gesichert werden. Dies kann beispielsweise im Rahmen des Betriebs einer bestimmten Anlage, Maschine oder Ähnlichem, vorteilhaft sein, wo während des operativen Betriebs der Anlage, der Maschine und/oder der Produktionsstätte beispielsweise keine Änderungen oder Eingriffe vorgenommen werden sollen, um den Ablauf der Produktion, der Maschine oder auch der Anlage nicht zu gefährden.

Weiterhin kann beispielsweise vorgesehen sein, dass vor Einstellen eines Änderungszustands für einen bestimmten Benutzer beispielsweise an einem bestimmten oder auch mehreren Netzwerkgeräten, bestimmte Sicherheitskriterien abgefragt werden beziehungsweise bestimmte Einstellungen oder Konfigurationen vorgenommen werden, um beispielsweise die Maschine, Anlage und/oder Produktionsstätte gegenüber unzulässigen, ungewünschten oder gefährlichen Änderungen abzusichern oder zu schützen.

Weiterhin kann vorgesehen sein, dass eine Kommunikation zum Einstellen des Ruhezustands und/oder des Änderungszustands, über eine sichere Kommunikationsverbindung zwischen Sicherheits-Netzkomponente und Netzwerkgerät erfolgt. Eine solche sichere Kommunikationsverbindung kann beispielsweise als VPN-Verbindung ausgebildet sein, die beispielsweise als Punkt-Zu-Punkt-Verbindung zwischen beiden Geräten ausgebildet sein kann oder auch als Integration beider Geräte in ein entsprechend sicheres Netz, beispielsweise ein VPN-Netz. Die Kommunikation über die sichere Kommunikationsverbindung kann beispielsweise verschlüsselt (z.B. SSL-Verschlüsselung) erfolgen.

Diese Ausgestaltung hat den Vorteil, dass beispielsweise Kennwörter nicht einfach einsehbar bzw. abhörbar sind. So ist es zum Beispiel schwieriger oder unmöglich, durch reines Mithören einer Kommunikation, Rückschlüsse auf Zugangskennungen der Netzkomponente treffen zu können. Damit wird die Sicherheit des Systems gegenüber dem Zugriff von unberechtigten Personen oder Geräten, weiter erhöht.

Dabei kann die sichere Kommunikationsverbindung beispielsweise dauerhaft bestehen, regelmäßig aktiviert und deaktiviert werden, bei Bedarf auf- und dann wieder abgebaut werden und/oder vor jedem Kommunikationsschritt erneut aufgebaut und/oder danach wieder abgebaut werden.

In einer weiteren vorteilhaften Ausgestaltung umfasst die Sicherheits-Netzkomponente eine Protokoll-Datenbank, in welcher ein Zeitpunkt eines Einstellens des Ruhezustands und/oder ein Zeitpunkt eines Einstellens des Änderungszustands für das Netzwerkgerät gespeichert sind. Insbesondere kann in der Protokoll-Datenbank jeder Zeitpunkt des Einstellens des Ruhezustands und/oder jeder Zeitpunkt des Einstellens des Änderungszustands für das Netzwerkgerät gespeichert sein beziehungsweise gespeichert werden. Dabei bezieht sich die Formulierung "jeder Zeitpunkt" auf einen bestimmten vorgegebenen oder vorgebbaren oder auch regelmäßig neu setzbaren Anfangszeitpunkt. Dieser Anfangszeitpunkt kann beispielsweise ab dem Beginn eines bestimmten Betriebszustands, dem Einschalten der Sicherheits-Netzkomponente und/oder des Netzwerkgeräts, einem manuell gesetzten Zeitpunkt oder auch einem automatisch gesetzten Zeitpunkt erfolgen. Beispielsweise kann "jeder Zeitpunkt" derart vorgesehen und eingerichtet sein, dass immer eine konstante Anzahl von Zeitpunkten bezüglich Ruhezustand und/oder Änderungszustand in der Protokoll-Datenbank gespeichert sind.

Mit dieser Ausgestaltung kann die Sicherheit des Systems weiter erhöht werden, da über die Protokollierung der Umschaltvorgänge zwischen Ruhezustand und verschiedenen Änderungszuständen nachprüfbarer wird, wann Änderungen vorgenommen wurden beziehungsweise werden konnten, und so sich mögliche Fehlerquellen und Ursachen besser eingrenzen lassen. Als Zeitpunkt können beispielsweise ein Datum und/oder eine Uhrzeit eines Einstellens des Ruhezustands und/oder Änderungszustands gespeichert werden. Weiterhin kann auch eine zeitähnliche Größe, wie beispielsweise ein Zählerstand eines regelmäßig laufenden Zählers, abgespeichert werden.

Weiterhin können neben dem Zeitpunkt des Einstellens von Ruhezustand und/oder Änderungszustand, auch weitere damit verbundene Daten, wie beispielsweise ein Benutzer, für welchen ein Änderungszustand eingestellt wurde, eine Kennung für "Ruhezustand" beim Einstellen eines Ruhezustands und/oder für "Änderungszustand beim Einstellen eines Änderungszustand, eine Identifikationsinformation bezüglich des Netzwerkgeräts oder Ähnliches, abgespeichert werden.

Mit der Speicherung solcher zusätzlicher Daten lässt sich die Sicherheit weiter erhöhen, da sich Zugriffe und mögliche Änderungen der Geräte noch besser nachvollziehen lassen. Insbesondere wird durch Verwendung einer entsprechenden Sicherheits-Netzkomponente eine solche Protokollierung und Rückverfolgung von Zugriffen auch bei solchen Netzwerkgeräten einfacher gemacht, die ursprünglich keine derartigen Sicherheitsvorkehrungen und Zugangs-Kontrollmöglichkeit und/oder Datenbanken integriert haben. Auf diese Weise lässt sich beispielsweise ein Netzwerk, welches auch Netzwerkgeräte älterer oder einfacherer Bauart aufweist, mit moderneren Sicherheits-Policies handhaben.

Weiterhin kann die Sicherheits-Netzkomponente zur Authentifizierung des Benutzers ausgebildet und eingerichtet sein. Weiterhin kann sie auch zum Einstellen des Änderungszustands für das Netzwerkgerät für den Benutzer in Abhängigkeit vom Ergebnis der Authentifizierung ausgebildet und eingerichtet sein. Insbesondere kann sie derart eingerichtet und ausgebildet sein, dass bei einem positiven Ergebnis der Authentifizierung des Benutzers, das heißt, der Benutzer hat sich als berechtigt authentifiziert, der Änderungszustand für das Netzwerkgerät eingestellt wird. Dabei kann dann beispielsweise beim Netzwerkgerät die entsprechende Benutzer-Zugangskennung als Zugangskennung für den Benutzer eingestellt und/oder hinterlegt werden. Auf diese Weise lässt sich die Sicherheit eines entsprechenden Systems weiter erhöhen, indem beispielsweise über modernere, bessere Authentifizierungsmechanismen für die Sicherheits-Netzkomponente, diese Zugangs-Sicherungs-Qualität durch die Sicherheits-Netzkomponente zumindest zum Teil auch auf die Netzwerkgeräte übertragen wird oder übertragbar ist.

Dabei kann die Authentifizierung beispielsweise ebenfalls unter Verwendung der Benutzer-Zugangskennung erfolgen. Weiterhin kann auch eine weitere Zugangskennung für die Authentifizierung einer Sicherheits-Netzkomponente vorgesehen sein, die z.B. auch höheren oder anderen Sicherheitskriterien gehorchen kann.

Nach Einstellen eines Änderungszustands für ein Netzwerkgerät kann weiterhin vorgesehen sein, dass der Ruhezustand für das Gerät oder für mehrere Geräte beispielsweise dann wieder hergestellt wird oder auch selbsttätig wieder hergestellt wird, wenn eine bestimmte Zeit verstrichen ist. Eine solche Zeit kann beispielsweise eine für die Bearbeitung eines Netzwerkgeräts übliche Zeit von 1 Stunde oder 24 Stunden oder auch ein typischer Wartungsintervallzeitraum sein.

Weiterhin kann vorgesehen sein, dass nach Einstellung eines Änderungszustands für ein Netzwerkgerät ein Ruhezustand selbsttätig hergestellt wird, nachdem sich der Benutzer aus dem entsprechenden Netzwerkgerät wieder ausgeloggt hat beziehungsweise sich dort abgemeldet hat. Dabei kann beispielsweise vorgesehen sein, dass das entsprechende Netzwerkgerät der Sicherheits-Netzkomponente ein entsprechendes Abmelden beziehungsweise Ausloggen meldet, worauf die Sicherheits-Netzkomponente den Ruhezustand selbsttätig einrichtet. Weiterhin kann auch vorgesehen sein, dass die Sicherheitseinrichtung regelmäßig kontrolliert, ob beispielsweise ein bestimmter Benutzer noch bei einem Netzwerkgerät angemeldet ist, und dann im Falle eines abgemeldeten Nutzers den Ruhezustand selbsttätig wieder herstellt. Das selbständige Wiederherstellen kann auch nach einer vorherigen Rückfrage bei einem Benutzer oder Administrator der Sicherheits-Netzkomponente erfolgen oder eine solche Rückfrage umfassen.

Die Sicherheits-Netzkomponente kann beispielsweise weiterhin derart ausgebildet und eingerichtet sein, dass bei jedem Einstellen eines Ruhezustands, beispielsweise für ein Netzwerkgerät oder auch für mehrere Netzwerkgeräte, eine neue Sicherheits-Zugangskennung verwendet wird. Dabei kann vorgesehen sein, dass die neue Sicherheits-Zugangskennung sich von der vorhergehenden Sicherheits-Zugangskennung unterscheidet. Weiterhin kann vorgesehen sein, dass jede neue Sicherheits-Zugangskennung sich von mehreren vorhergehenden Sicherheits-Zugangskennungen oder auch allen bisher verwendeten Sicherheits-Zugangskennungen unterscheidet. Dass sich die Sicherheits-Zugangskennung von allen bisher verwendeten Kennungen unterscheidet, kann derart realisiert sein, dass alle bisherigen Sicherheits-Zugangskennungen in einem Speicher oder einer Datenbank gespeichert sind, wobei das "alle" durch die Speicherkapazität des verwendeten Speichers beziehungsweise der Datenbank oder Ähnliches begrenzt sein kann.

Dabei kann eine Sicherheits-Zugangskennung beispielsweise jeweils immer nur für ein Zweckgerät verwendet werden, das heißt, verschiedene, von der Sicherheits-Netzkomponente gehandhabte Netzwerkgeräte haben verschiedene Sicherheits-Zugangskennungen. Weiterhin kann auch vorgesehen sein, dass für mehrere oder alle von der Sicherheits-Netzkomponente gehandhabten Netzwerkgeräte eine gemeinsame Sicherheits-Zugangskennung verwendet wird. Diese kann beispielsweise auch regelmäßig geändert oder aktualisiert werden, wenn beispielsweise eines der gehandhabten Netzwerkgeräte von der Sicherheits-Netzkomponente vom Änderung- und den Ruhezustand geschaltet wird.

Auf diese Weise wird das System noch besser gegen beispielsweise unberechtigte Zugriffe geschützt, indem auch im Ruhezustand regelmäßig neue Zugangskennungen verwendet werden, und so vielleicht zu einem früheren Zeitpunkt unrechtmäßig erworbene Zugangskennungen zu einem späteren Zeitpunkt nicht mehr verwendbar sind.

In einer weiteren vorteilhaften Ausgestaltung ist die Sicherheits-Netzkomponente zum Abschalten von einer oder mehreren Kommunikations-Schnittstellen und/oder Kommunikations-Ports des Netzwerkgeräts eingerichtet und ausgebildet. Dabei kann die Sicherheits-Netzkomponente beispielsweise zum Abschalten solcher Kommunikations-Schnittstellen und/oder Kommunikations-Ports des Netzwerkgeräts eingerichtet und ausgebildet sein, welche in der Sicherheits-Netzkomponente oder im Netzwerkgerät als unbenutzt registriert sind. Dabei wird unter einem Abschalten eines Ports in diesem Zusammenhang beispielsweise verstanden, dass die Sicherheits-Netzkomponente die Schnittstelle bzw. den Port quasi per "Fernsteuerung" abschaltet oder auch, dass die Sicherheits-Netzkomponente einen Befehl an das Netzwerkgerät ausgibt, in welchem diese beispielsweise das Netzwerkgerät auffordert, bestimmte Ports oder Schnittstellen abzuschalten oder auch das Netzwerkgerät auffordert, allgemein unbenützte Schnittstellen und Ports abzuschalten, welche beim Netzwerkgerät als unbenutzt bekannt sind.

Eine abgeschaltete Schnittstelle bzw. ein abgeschalteter Port ermöglicht beispielsweise keinen Zugriff auf das Netzwerkgerät über diesen Port bzw. diese Schnittstelle mehr. Beispielsweise kann ein Abschalten einer Schnittstelle oder eines Ports erfolgen, indem interne Parameter für den Port bzw. die Schnittstelle entsprechend gesetzt werden. Z.B. bei Ethernet-Switches können derartige Parameter für einen abgeschalteten Port beispielsweise die Zustände "blocking", "discarding" und/oder "disabled" sein.

Ein Port bzw. eine Schnittstelle kann als unbenutzt registriert sein, wenn beispielsweise dies so in einer Projektierung des Kommunikations-Netzes oder der Netzkomponente vorgesehen und eingetragen ist. Die Infos über einen unbenutzten Port oder eine unbenutzte Schnittstelle kann beispielsweise in der Sicherheits-Netzkomponente und/oder dem Netzwerkgerät selbst vorgehalten sein. Weiterhin kann die Sicherheits-Netzkomponente oder das Netzwerkgerät diese Information auch von einem Netzwerk-Management- oder Projektierungs-System beziehen.

Diese Ausgestaltung hat den Vorteil, dass durch das Abschalten unbenutzter Ports ein unregistrierter oder unerlaubter Zugriff auf das Netzwerkgerät weiter erschwert wird, indem beispielsweise eine Ankopplung über freie Kommunikations-Ports nicht mehr möglich ist und somit zumindest Teile des Kommunikations-Netzes unterbrochen werden müssen, um an das Netzwerkgerät heranzukommen.

Insbesondere kann die Sicherheits-Netzkomponente derart eingerichtet und ausgebildet sein, dass das genannte Abschalten von Kommunikations-Netz-Schnittstellen und/oder Kommunikations-Ports unmittelbar vor, beim, während oder nach dem Umschalten in einen Ruhezustand erfolgt.

Dabei kann die Sicherheits-Netzkomponente derart eingerichtet und ausgebildet sein, dass der Ruhezustand und/oder ein Anderungszustand für das Netzwerkgerät nur eingestellt wird oder nur einstellbar ist, wenn alle unbenutzten Kommunikations-Schnittstellen und/oder unbenutzte Kommunikations-Ports des Netzwerkgerätes abgeschaltet wurden oder sind. Insbesondere kann vorgesehen sein, dass vor dem Einschalten des Ruhezustandes alle unbenutzten Kommunikations-Schnittstellen und/oder Kommunikations-Ports abgeschaltet sein müssen.

Auf diese Weise kann beispielsweise erreicht werden, dass im Ruhezustand eines Netzwerkgerätes eine sehr hohe Sicherheit gegenüber möglichen schädlichen Zugriffen auf das Netzwerkgerät besteht, da neben der Verwendung einer möglichst sicheren und nicht oder nur wenig verbreiteten Sicherheits-Zugangskennung auch alle nicht für das Kommunikations-Netz projektierten und/oder freigegebenen Schnittstellen geblockt sind und so über diese kein Zugriff von außen auf das Netzwerkgerät möglich ist.

Die vorstehende Aufgabe wird weiterhin gelöst von einem Kommunikations-System, umfassend eine Sicherheits-Netzkomponente gemäß der vorliegenden Beschreibung und ein daran über ein Kommunikations-Netz gemäß der vorliegenden Beschreibung angeschlossenes Netzwerkgerät gemäß der vorliegenden Beschreibung. Dabei weist das Netzwerkgerät einen Zugangsschutz mittels einer Zugangskennung für den Zugriff auf das Netzwerkgerät auf, wobei die Zugangskennung des Netzwerkgerätes durch die Sicherheits-Netzkomponente einstellbar und/oder änderbar ist.

Weiterhin können in dem Kommunikations-Netz ein oder mehrere weitere Netzwerkgeräte gemäß der vorliegenden Beschreibung vorgesehen sein, wobei auch die ein- oder mehreren weiteren Netzwerkgeräte jeweils einen Zugangsschutz mittels einer Zugangskennung für den Zugriff auf das jeweilige Netzwerkgerät aufweisen und diese Zugangskennung jeweils auch durch die Sicherheits-Netzkomponente einstellbar und/oder änderbar ist. Weiterhin ist in diesem Fall auch die Sicherheits-Netzkomponente zur Handhabung des Zugangsschutzes der einen oder mehreren Netzwerkgeräte entsprechend der Handhabung des Zugangsschutzes im Netzwerkgerät gemäß der vorliegenden Beschreibung eingerichtet und ausgebildet. Insbesondere kann die Sicherheits-Netzkomponente beispielsweise zur Handhabung des Zugangsschutzes der vorstehend genannten im Kommunikations-Netz vorhandenen Netzwerkgeräte unabhängig voneinander ausgebildet und eingerichtet sein.

Derartige Kommunikations-Systeme erhöhen die Sicherheit gegenüber dem Stand der Technik, da durch die Verwendung einer Sicherheits-Netzkomponente gemäß der vorliegenden Beschreibung in Kombination beispielsweise mit älteren oder einfacheren Netzwerkgeräten gemäß der vorliegenden Beschreibung trotzdem eine erhöhte Sicherheitsstufe zum Zugangsschutz für die Netzwerkgeräte erzielbar ist.

Die vorstehend genannte Aufgabe wird auch gelöst durch ein Verfahren zur Handhabung eines Zugangsschutzes eines Netzwerkgerätes gemäß der vorliegenden Beschreibung durch eine Sicherheits-Komponente gemäß der vorliegenden Beschreibung mit den nachfolgenden Verfahrensschritten:
a) Einstellen des Ruhezustandes für das Netzwerkgerät durch Einrichten der Sicherheits-Zugangskennung als Zugangskennung für das Netzwerkgerät durch die Sicherheits-Netzkomponente;
b) Authentifizieren eines Benutzers durch die Sicherheits-Netzkomponente;
c) Nach erfolgreicher Authentifizierung des Benutzers:
   c1) Authentifizieren der Sicherheits-Netzkomponente am Netzwerkgerät, und nachfolgend
   c2) Einstellen des Änderungszustandes für den Benutzer für das Netzwerkgerät durch Einrichten der Benutzer-Zugangskennung als Zugangskennung für das Netzwerkgerät durch die Sicherheits-Netzkomponente.

Weiterhin kann beim oder nach dem Einstellen des Änderungszustandes für den Benutzer vorgesehen sein, dass für den Benutzer und/oder das Gerät festgelegte oder vorgesehene Zugriffsrechte und/oder Änderungsmöglichkeiten im Netzwerkgerät eingestellt werden, beispielsweise durch das Netzwerkgerät selbst oder durch die Sicherheits-Netzkomponente.

Bei einer fehlerhaften oder misslungenen Authentifizierung des Benutzers wird beispielsweise kein Änderungszustand für den Benutzer für Netzwerkgerät eingerichtet und/oder ein weiterer Zugriff des Benutzers auf die Sicherheits-Netzkomponente und/oder das Netzwerkgerät verhindert.

Die Authentifizierung eines Benutzers an der Sicherheits-Netzkomponente kann beispielsweise durch Eingabe einer Benutzer-Identifikation und einer zugehörigen Benutzer-Zugangskennung erfolgen. Dabei kann diese Benutzer-Zugangskennung beispielsweise der Benutzer-Zugangskennung für das Netzwerk-Gerät entsprechen. Nachdem die Sicherheits-Netzkomponente den Benutzer korrekt authentifiziert hat, kann sie dann Kontakt mit dem Netzwerkgerät aufnehmen, indem sie sich unter Anderem bei diesem anmeldet. Befindet sich das Netzwerkgerät im Ruhezustand, kann diese Anmeldung beispielsweise durch eine Authentifizierung mittels der Sicherheits-Zugangskennung erfolgen.

Nach Herstellung des Kontakts zwischen Sicherheits-Netzkomponente und Netzwerkgerät kann dann beispielsweise durch einen speziellen Befehl oder auch eine Kombination mehrerer Befehle der Änderungszustand für den Benutzer am Netzwerkgerät eingestellt werden, indem beispielsweise zumindest unter Anderem die Benutzer-Zugangskennung als Zugangskennung für das Netzwerkgerät eingestellt wird. Weiterhin können beispielsweise auch für den Benutzer registrierte Zugriffsrechte und/oder Änderungsmöglichkeiten eingestellt werden. Das Netzwerkgerät kann dann in der Sicherheits-Netzkomponente als im Änderungszustand für den genannten Benutzer befindlich registriert werden, beispielsweise in einer entsprechenden Datenbank.

Die Kontaktaufnahme der Sicherheits-Netzkomponente mit dem Netzwerkgerät kann auch ohne Authentifizierung erfolgen, beispielsweise durch eine einfache Kommunikationsaufnahme. Weiterhin kann auch eine feststehende Kommunikationsverbindung zwischen Sicherheits-Netzkomponente und Netzwerkgerät bestehen.

Weiterhin kann vorgesehen sein, dass vor der Kommunikation zwischen Sicherheits-Netzkomponente und Netzwerkgerät, oder auch beispielsweise vor jedem Kommunikationsschritt zwischen Sicherheits-Netzkomponente und Netzwerkgerät, eine sichere Kommunikationsverbindung zwischen der Sicherheits-Netzkomponente und dem Netzwerkgerät aufgebaut wird oder zumindest überprüft wird, ob eine sichere Kommunikationsverbindung zwischen der Sicherheits-Netzkomponente und dem Netzwerkgerät besteht.

Dabei kann eine sichere Kommunikationsverbindung bzw. das Herstellen einer solchen beispielsweise gemäß der vorliegenden Beschreibung ausgebildet und eingerichtet sein.

Das Aufbauen der sicheren Kommunikationsverbindung vor der Kommunikation zwischen Sicherheits-Netzkomponente und Netzwerkgerät kann beispielsweise einmalig beim Einrichten des Kommunikations-Netzes, beim Einschalten eines der genannten Komponenten oder Geräte oder auch beim Hochfahren des Netzes oder auch zu regelmäßigen Zeitabständen oder vor einer erstmaligen Kommunikation zwischen Sicherheits-Netzkomponente und Netzwerkgerät erfolgen.

In einer vorteilhaften Ausgestaltung kann nachfolgend im Verfahrensschritt a) vorgesehen sein:
a1) Erfassung eines Zeitpunkts des Einstellens des Ruhezustandes für das Netzwerkgerät.

Weiterhin kann nachfolgend Verfahrensschritt c2) vorgesehen sein:
c3) Erfassen eines Zeitpunkts des Einstellens des Änderungszustandes für den Benutzer am Netzwerkgerät.

Dabei können beim Einstellen des Ruhezustandes beispielsweise ein Zeitpunkt des Einstellens des Ruhezustandes, ggf. gemeinsam mit einer Geräte-Kennung und/oder einer Kennung, dass der Ruhezustand eingestellt wurde, hinterlegt werden. Das Hinterlegen kann beispielsweise in einer Datenbank oder Liste erfolgen, in der mehrere derartige Zeitpunkte registriert sind oder sein können, z.B. in einer Protokoll-Datenbank gemäß der vorliegenden Beschreibung.

Der Zeitpunkt des Einstellens des Änderungszustandes kann ebenfalls beispielsweise in einer Datenbank oder Liste erfolgen, beispielsweise gemeinsam mit einer Geräte-Kennung und/oder einer Benutzer-Kennung und/oder einer Kennung, dass der Änderungszustand für den Benutzer eingestellt wurde. Auch hier kann ein Hinterlegen mehrerer solcher Zeitpunkte in einer Datenbank vorgesehen sein, z.B. in einer Protokoll-Datenbank gemäß der vorliegenden Beschreibung.

Auf diese Weise ist es möglich, die Zugriffe auf das Netzwerkgerät zu protokollieren und aus einem solchen Protokoll nachzuvollziehen, wann möglicherweise bestimmte Änderungen erfolgt sind und so Fehlerquellen besser identifizieren zu können.

Weitere vorteilhafte Ausgestaltungen finden sich in den Unteransprüchen.

Im Folgenden wird die vorliegende Erfindung mit Bezug auf die beiliegenden Figuren beispielhaft erläutert.

Es zeigen:
Fig. 1: Kommunikationssystem mit einem Sicherheitsserver und einem Switch;
Fig. 2: das Kommunikationssystem gemäß Fig. 1 mit einem daran angeschlossenen Benutzer-Rechner.

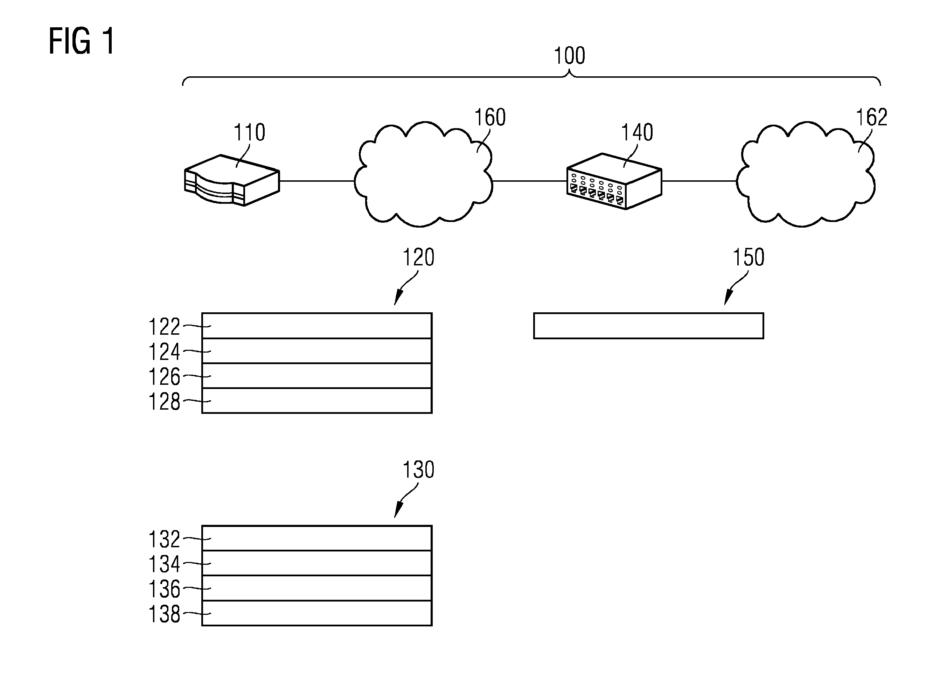

Fig. 1 zeigt ein Kommunikationssystem 100 mit einem Sicherheitsserver 110, der über ein erstes Automatisierungsnetz 160 mit einem Kommunikations-Switch 140 verbunden ist, wobei der Switch 140 weiterhin mit einem zweiten Automatisierungsnetz 162 verbunden ist. Dabei umfasst der Sicherheitsserver 110 eine Password-Datenbank 120, in dem in einem ersten Datensatz 122 ein Systempasswort für einen Ruhezustand gespeichert ist und in drei weiteren Datensätzen 124, 126, 128 für drei verschiedene Benutzer jeweilige Kennungen gespeichert sind. Weiterhin umfasst der Sicherheitsserver eine Protokolldatenbank 130, in welchen in Fig. 1 beispielhaft vier Datensätze 132, 134, 136, 138, dargestellt sind, wobei in jedem der Datensätze ein Zeitpunkt und der Zustand, der zu diesem Zeitpunkt eingestellt wurde, speicherbar beziehungsweise gespeichert ist. Weiterhin kann in jedem der Datensätze 132, 34, 136, 138, auch noch eine Kennung für den Switch 140, sowie eine Kennung für den jeweiligen Benutzer gespeichert werden, so dass aus jedem Datensatz erkennbar ist, wann bei welchem Gerät wer welchen Zustand eingestellt hat. Der Switch 140 umfasst nur einen Speicherplatz 150 für ein Passwort zum Zugriff auf den Switch.

Der Sicherheitsserver 110 kann über das erste Automatisierungsnetz 160 am Switch 140 einen Ruhezustand und einen Änderungszustand für einen bestimmten Benutzer einstellen. Zum Einstellen des Ruhezustands beim Switch 140 bestimmt der Sicherheitsserver eine zufällige Zeichenkombination als Systempasswort, speichert dies im entsprechenden Datensatz 122 der Passwort-Datenbank 120 ab und setzt über das Automatisierungsnetz 160 im Switch 140 dieses Systempasswort als Zugangspasswort, das dazu in der entsprechenden Speichereinheit 150 des Switchs 140 eingetragen wird. Daraufhin ist ein Zugriff auf den Switch nur über das Systempasswort als Zugangskennung möglich. Innerhalb einer Sicherheitspolicy kann dabei beispielsweise vorgesehen sein, dass dieses Systempasswort weder über den Sicherheitsserver 110 noch über den Switch 140 einer externen Person zugänglich ist, so, so dass ein Zugriff auf den Switch 140 in diesem Zustand unmöglich oder zumindest erschwert wird.

Möchte ein bestimmter Benutzer auf den Switch 140 zugreifen, so muss er sich zuerst am Sicherheitsserver 110 mit einer für ihn in der Passwort-Datenbank 120 gespeicherten Benutzerkennung authentifizieren. Kann der Sicherheitsserver den Benutzer und die eingegebene Kennung in einer der dafür vorgesehenen Datenbankabschnitte 124, 126, 128 identifizieren, so verändert er das im Switch 140 vorgesehene und gespeicherte Passwort vom Systempasswort in die Zugangskennung für denjenigen Benutzer, wie er in der Passwort-Datenbank 120 im Sicherheitsserver gespeichert ist, indem er diese Kennung innerhalb des entsprechenden Speicherbereichs 150 im Switch 140 hinterlegt.

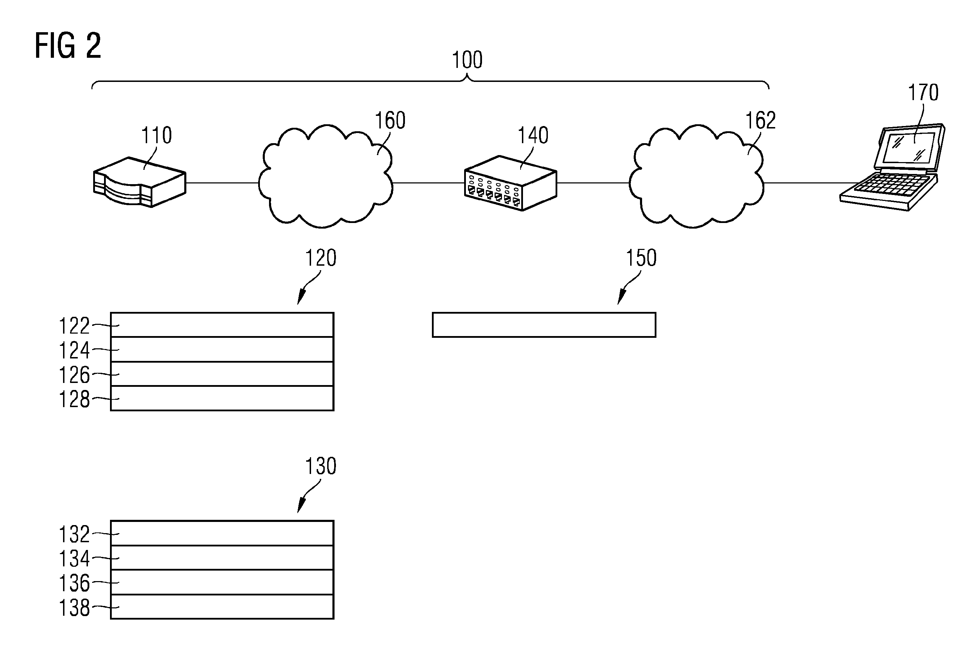

Fig. 2 zeigt das in Fig. 1 dargestellte Kommunikationssystem mit einer über das zweite Automatisierungsnetz 162 angeschlossenen Benutzer-Computer 170, welcher vom am Sicherheitsserver 110 angemeldeten und authentifizierten Benutzer bedient wird. Über die jetzt als Zugangskennung für den Switch 140 gesetzte Benutzerkennung hat der Benutzer 170 jetzt Zugriff auf den Switch 140 und kann dort Änderungen, Kontrollen, Wartungsarbeiten, Parametrierung, Kontrollschritte oder Ähnliches übernehmen.

Meldet sich der Benutzer 170 dann wieder vom Switch 140 ab, so meldet dies der Switch 140 über das Kommunikationsnetz 160 dem Sicherheitsserver 110, welcher dann wieder den Ruhezustand beim Switch 140 einstellt, indem die Zugangskennung wieder in eine dann neu erstelltes Systempasswort umgewandelt wird. Dieses wird dann sowohl als Systempasswort in der Passwort-Datenbank des Sicherheitsservers, als auch als Zugangspasswort in der entsprechenden Datenbank 150 des Switchs 140 abgespeichert.

Parallel dazu werden alle diese Umschaltschritte, das heißt der Zeitpunkt des Umschaltens in den Änderungszustand und auch das Zurückumschalten in den Ruhezustand in der Protokolldatenbank 130 gespeichert. So wird beispielsweise das Umschalten in den Ruhezustand in einem ersten Datensatz 132 gespeichert, in dem der Zeitpunkt des Umschaltens, eine Kennung für den Switch 140 und eine Kennung dafür, dass der Ruhezustand eingestellt wurde, in diesem Datensatz hinterlegt wird. Weiterhin wird auch das Umschalten in den Änderungszustand in einem zweiten Datensatz 134 der Protokolldatenbank 130 hinterlegt, indem der Zeitpunkt des Umschaltens, eine Kennung für den Switch 140, eine Kennung für die Tatsache, dass ein Änderungszustand eingestellt wurde sowie eine Kennung für den Benutzer in dem entsprechenden Datensatz 134 hinterlegt wird.

Jede weitere Zustandsänderung wird in einem neuen Datensatz 136, 138 der Protokolldatenbank hinterlegt, so dass zu einem späteren Zeitpunkt genau nachvollziehbar ist, wann welcher Benutzer Zugriff auf den Switch 140 hatte, wie lange er daran angeschlossen war, und wann kein Benutzer Zugriff auf den Switch 140 hatte.

Auf diese Weise lässt sich beispielsweise besser ein Fehler identifizieren und eingrenzen. Sind beispielsweise im Automatisierungsnetz 160 oder auch im weiteren Automatisierungsnetz 162 ab einem bestimmten Zeitpunkt Fehler oder Störungen aufgetreten, so kann anhand der Protokolldatenbank 130 im Sicherheitsserver 110 geprüft werden, welcher Benutzer als letzter vor Auftreten der Störung am Switch 140 gearbeitet hat wodurch einfacher mögliche Fehlerquellen identifizierbar oder eingrenzbar sind.

Die vorliegende Erfindung beschreibt einen Sicherheitsserver zur Handhabung eines oder mehrerer Netzwerkgeräte in einem Kommunikationsnetzwerk oder Automatisierungsnetzwerk, wobei über den Sicherheitsserver das beziehungsweise die Netzwerkgeräte in einen Ruhezustand schaltbar sind, in welchem beispielsweise über bekannte Benutzer-Passwörter kein Zugriff auf das Netzwerkgerät möglich ist. Möchte ein bestimmter Benutzer auf eins der Netzwerkgeräte zugreifen, so kann der Sicherheitsserver das entsprechende Gerät in einen Änderungszustand für den Benutzer setzen und somit für den Benutzer mit seiner Kennung freischalten.

## Patentansprüche

1. Sicherheits-Netzkomponente (110) zur Handhabung eines Zugangsschutzes für ein Netzwerkgerät (140) über ein Kommunikationsnetz (160),
- wobei die Sicherheits-Netzkomponente (110) eine Zugangsschutz-Datenbank (120) umfasst, in der für einen Benutzer (170) eine Benutzer-Zugangskennung zur Ermöglichung eines Zugriffs auf das Netzwerkgerät (140) und eine sich von der Benutzer-Zugangskennung unterscheidende Sicherheits-Zugangskennung gespeichert ist,
- wobei die Sicherheits-Netzkomponente (110) zur Einrichtung und/oder Änderung eines Zugangsschutzes im Netzwerkgerät (140) eingerichtet und ausgebildet ist, und
- wobei in der Sicherheits-Netzkomponente (110) für das Netzwerkgerät (140) ein Änderungszustand für den Benutzer (170) und ein Ruhezustand derart vorgesehen sind,
- dass die Sicherheits-Netzkomponente (110) zum Einrichten der Sicherheits-Zugangskennung als Zugangskennung für das Netzwerkgerät (140) beim Einstellen des Ruhezustands für das Netzwerkgerät (140) eingerichtet und ausgebildet ist, und
- dass die Sicherheits-Netzkomponente (110) zum Einrichten der Benutzer-Zugangskennung als Zugangskennung für das Netzwerkgerät (140) beim Einstellen des Änderungszustands für den Benutzer (170) für das Netzwerkgerät (140) eingerichtet und ausgebildet ist.

2. Sicherheits-Netzkomponente nach Anspruch 1,
**dadurch gekennzeichnet,**
**dass** beim Einstellen des Ruhezustands das Einrichten des Netzwerkgeräts (140) durch die Sicherheits-Netzkomponente (110) derart erfolgt, dass die Sicherheits-Zugangskennung die einzige Möglichkeit des Zugriffs eines Benutzers (170) auf das Netzwerkgerät (140) ist.

3. Sicherheits-Netzkomponente nach Anspruch 1 oder 2,
**dadurch gekennzeichnet,**
**dass** eine Kommunikation zum Einstellen des Ruhezustands und des Änderungszustands über eine sichere Kommunikationsverbindung zwischen Sicherheits-Netzkomponente (110) und Netzwerkgerät (140) erfolgt.

4. Sicherheits-Netzkomponente einem der Ansprüche 1 bis 3,
**dadurch gekennzeichnet,**
**dass** die Sicherheits-Netzkomponente (110) eine Protokoll-Datenbank (130) umfasst, in welcher ein Zeitpunkt eines Einstellens des Ruhezustands und/oder ein Zeitpunkt eines Einstellens des Änderungszustands für das Netzwerkgerät (140) gespeichert ist,
insbesondere in welcher jeder Zeitpunkt des Einstellens des Ruhezustands und/oder jeder Zeitpunkt des Einstellens des Änderungszustands für das Netzwerkgerät (140) gespeichert ist.

5. Sicherheits-Netzkomponente einem der Ansprüche 1 bis 4,
**dadurch gekennzeichnet,**
**dass** die Sicherheits-Netzkomponente (110) zur Authentifizierung des Benutzers (160) und in Abhängigkeit vom Ergebnis der Authentifizierung zum Einstellens des Änderungszustands für das Netzwerkgerät (140) für den Benutzer (160) eingerichtet und ausgebildet ist.

6. Sicherheits-Netzkomponente einem der Ansprüche 1 bis 5,
**dadurch gekennzeichnet,**
**dass** bei jedem Einstellen eines Ruhezustands für ein Netzwerkgerät (140) eine neue Sicherheits-Zugangskennung verwendet wird.

7. Sicherheits-Netzkomponente einem der Ansprüche 1 bis 6,
**dadurch gekennzeichnet,**
**dass** die Sicherheits-Netzkomponente (110) zum Abschalten von Kommunikations-Schnittstellen und/oder Kommunikations-Ports des Netzwerkgeräts (140) eingerichtet und ausgebildet ist,
insbesondere zum Abschalten solcher Kommunikations-Schnittstellen und/oder Kommunikations-Ports des Netzwerkgeräts (140) eingerichtet und ausgebildet ist, die in der Sicherheits-Netzkomponente (110) als unbenutzt registriert sind.

8. Sicherheitsnetzkomponente einem der Ansprüche 1 bis 7,
**dadurch gekennzeichnet,**
**dass** die Sicherheits-Netzkomponente (110) derart eingerichtet und ausgebildet ist, dass der Ruhezustand und/oder ein Änderungszustand für das Netzwerkgerät (140) nur eingestellt wird oder nur einstellbar ist, wenn alle unbenutzten Kommunikations-Schnittstellen und/oder Kommunikations-Ports des Netzwerkgeräts (140) abgeschaltet wurden und/oder sind.

9. Kommunikationssystem, umfassend eine Sicherheits-Netzkomponente (110) gemäß einem der Ansprüche 1 bis 8 und ein daran über das Kommunikationsnetz (160) angeschlossenes Netzwerkgerät (140) gemäß einem der Ansprüche 1 bis 8, wobei das Netzwerkgerät (140) einen Zugangsschutz mittels einer Zugangskennung für den Zugriff auf das Netzwerkgerät aufweist und die Zugangskennung des Netzwerkgeräts (140) durch die Sicherheits-Netzkomponente (110) einstellbar und/oder änderbar ist.

10. Kommunikationssystem gemäß Anspruch 9,
**dadurch gekennzeichnet,**
**dass** das Kommunikationsnetz ein weiteres Netzwerkgerät gemäß einem der Ansprüche 1 bis 8 umfasst, wobei auch das weitere Netzwerkgerät einen Zugangsschutz mittels einer Zugangskennung für den Zugriff auf das Netzwerkgerät aufweist und diese Zugangskennung durch die Sicherheits-Netzkomponente (110) einstellbar und/oder änderbar ist, und
wobei die Sicherheits-Netzkomponente (110) auch zur Handhabung des Zugangsschutzes des weiteren Netzwerkgeräts entsprechend dem des Netzwerkgeräts (140) eingerichtet und ausgebildet ist.

11. Verfahren zur Handhabung eines Zugangsschutzes eines Netzwerkgeräts (140) gemäß einem der Ansprüche 1 bis 10 durch eine Sicherheits-Netzkomponente (110) gemäß einem der Ansprüche 1 bis 10, **gekennzeichnet durch** die Verfahrensschritte:
a.) Einstellen des Ruhezustands für das Netzwerkgerät (140) **durch** Einrichten der Sicherheits-Zugangskennung als Zugangskennung für das Netzwerkgerät (140) **durch** die Sicherheits-Netzkomponente (110);
b.) Authentifizieren eines Benutzers **durch** die Sicherheits-Netzkomponente (110);
c.) nach erfolgreicher Authentifizierung des Benutzers:
c1.) Kontaktaufnahme der Sicherheits-Netzkomponente (110) mit dem Netzwerkgerät (140), und nachfolgend c2.) Einstellen des Änderungszustands für den Benutzer (160) für das Netzwerkgerät (140) **durch** Einrichten der Benutzer-Zugangskennung als Zugangskennung für das Netzwerkgerät (140) **durch** die Sicherheits-Netzkomponente (110).

12. Verfahren nach Anspruch 11,
**dadurch gekennzeichnet,**
**dass** vor der Kommunikation zwischen Sicherheits-Netzkomponente (110) und Netzwerkgerät (140) oder vor jedem Kommunikations-Schritt zwischen Sicherheits-Netzkomponente (110) und Netzwerkgerät (140) eine sichere Kommunikationsverbindung zwischen der Sicherheits-Netzkomponente (110) und dem Netzwerkgerät (140) aufgebaut wird.

13. Verfahren nach Anspruch 11 oder 12,
**dadurch gekennzeichnet,**
**dass** nachfolgend Verfahrensschritt a.):
a1.) ein Zeitpunkt des Einstellens des Ruhezustands für das Netzwerkgerät (140) erfasst wird; und nachfolgend Verfahrensschritt c2.):
c3.) ein Zeitpunkt des Einstellens des Änderungszustands für den Benutzer (160) am Netzwerkgerät (140) erfasst wird.
